# EUROPÄISCHE PATENTSCHRIFT

(11) **EP 0 618 310 B1**
(45) Veröffentlichungstag und Bekanntmachung des Hinweises auf die Patenterteilung: **22.07.1998**
(21) Anmeldenummer: 94104571.8
(22) Anmeldetag: 23.03.1994
(51) Int. Cl.: C23C 24/08, C23C 4/06, C23C 4/18, F01D 5/28, C23C 4/02

(54) **Verfahren zum Herstellen von verschleissfesten Kanten an Turbinenschaufeln**
Process for the production of wear resistant edges on turbine blades
Procédé de production des bords résistants à l'usure sur les aubes de turbine

(30) Priorität: 02.04.1993 DE 4310896
(43) Veröffentlichungstag der Anmeldung: 05.10.1994
(73) Patentinhaber: TFB Feingusswerk Bochum GmbH, 44793 Bochum (DE)
(72) Erfinder: Willems, Christian, D-44789 Bochum (DE); Luckow, Axel C.D., D-40822 Mettmann (DE)
(74) Vertreter: Dahlkamp, Heinrich-Leopold

(56) Entgegenhaltungen:
- EP-A- 0 290 051
- EP-A- 0 378 376
- DE-A- 2 816 283
- US-A- 4 155 152
- DESIGN ENGINEERING, 1.Juli 1987 LONDON GB, Seite 28 'Integral and wear-resistant powder coatings by hot isostatic pressing'
- PATENT ABSTRACTS OF JAPAN vol. 015 no. 373 (C-0869) ,19.September 1991 & JP-A-03 150331 (TOSHIBA CORP) 26.Juni 1991,
- PATENT ABSTRACTS OF JAPAN vol. 015 no. 167 (C-0827) ,26.April 1991 & JP-A-03 036230 (TOSHIBA CORP) 15.Februar 1991,
- CHEMICAL ABSTRACTS, vol. 103, no. 16, 1.Oktober 1985 Columbus, Ohio, US; abstract no. 127724q, 'Protection of gas turbines from solid particulate erosion ' Seite 270;
- JOURNAL OF VACUUM SCIENCE AND TECHNOLOGY: PART A, Bd. 4, Nr. 6, 1.November 1986 NEW YORK US, Seiten 2629-2632, HAROLD E. SLINEY 'A new chromium carbide-based tribological coating for use to 900 C with particular reference to the Stirling engine'

## Beschreibung

Die Erfindung bezieht sich auf ein Verfahren zur Herstellung von verschleißfesten Kanten an Turbinenschaufeln, z. B. im Bereich der oberen Schaufeleintrittskante und am Deckblatt.

Um die Schaufelkanten von Dampfturbinen hauptsächlich gegen Erosionsangriff zu schützen, müssen diese mit einem speziellen Kantenschutz versehen werden. Dieser Kantenschutz wird bei Turbinenschaufeln aus Chromstählen z. B. durch induktives Härten erreicht, was in den meisten Fällen technisch ausreichend ist.

Der Kantenschutz bei Turbinenschaufeln aus Titanlegierungen wird nach EP 0 282 831 B1 aus einer durch Laserstrahl geschmolzenen heterogenen Pulvermischung mit ca. 1/3 Gewichtsanteilen Titankarbid, Titannitrid oder Titanborid sowie nichtoxidierbarem martensitischen oder austenitisch-martensitischen Stahl gebildet, die durch eine mindestens 1 mm dicke, ebenfalls durch Laserstrahl geschmolzene Unterschicht aus reinem Vanadiumpulver vom Grundmaterial getrennt ist.

In der EP 0 247 582 B1 wird ein Verfahren zum Aufbringen einer Schutzschicht auf eine Turbinenschaufel aus einer vanadiumhaltigen Titanlegierung vorgestellt, bei dem zunächst als Zwischenschicht ein Vanadiumpulver mittels eines mobilen Induktors induktiv erwärmt und aufgeschmolzen wird und darüber eine ebenfalls aus Pulver induktiv vorgeschmolzene Schicht aus einer Kobalt-Chrom-Wolfram-Legierung aufgebracht wird.

Die EP 0 249 092 B1 beschreibt das Auflöten einer gesinterten und mechanisch verdichteten Schutzkappe aus einer titankarbidhaltigen Eisenbasislegierung mit hohen Chrom- und Kobaltgehalten mittels eines dünnen Blattes von 70 - 150 mm Dicke auf Kupferbasis im Vakuum oder Inertgas bei 900 - 950 °C.

Die FR 2 663 343 B1 beschreibt schließlich die Herstellung eines Verbundwerkstoffes mittels Pulvermetallurgie, Schweißen oder anderer Verfahren, wie Sintern oder heißisostatisches Pressen. Das Aufbringen dieses Verbundwerkstoffes zum Schutz der Turbinenschaufelkante erfolgt wiederum mittels temperaturunterstützter Verfahren, wie z. B. Löten.

Bei allen beschriebenen Verfahren ergeben sich in metallurgischer und bauteiltechnischer Hinsicht Nachteile, wie hohe lokale Erwärmung bis über den Schmelzpunkt, Aufmischung, Gefügeveränderungen, Eigenspannungen, relativ grobe und zur Seigerung neigende Schweißgefüge, Abnahme der dynamischen Bauteilkennwerte und zum Teil unbeabsichtigte Lokalelementbildung.

Aus der EP 0 378 376 A1 ist ein Verfahren zum Herstellen von verschleißfesten Kanten an einer Reaktorpumpe bekannt, wobei vor dem Aufbringen eines Kantenschutzes an der entsprechenden Stelle der Pumpe eine Aussparung angebracht und mittels Kapseltechnik eine Pulverschicht aufgebracht wird, die anschließend durch heißisostatisches Pressen verdichtet wird.

In der US-A 4,155,152 ist schließlich ein Verfahren zum Herstellen von verschleißfesten Kanten an Turbinenschaufeln beschrieben, wobei vor dem Aufbringen des Kantenschutzes an der entsprechenden Stelle der Schaufel eine Aussparung angebracht und durch Plasmaspritzen eine Pulverschicht aufgebracht wird.

Aufgabe der Erfindung ist es, ein neues Verfahren zum Herstellen von verschleißfesten Kanten an Turbinenschafeln, vorzugsweise für Dampfturbinen aus Chromstählen und/oder Titan-Basislegierungen, vorzuschlagen, bei dem ein auf die spätere Belastung werkstofftechnisch optimal abgestimmter pulvermetallurgischer Kantenschutz hergestellt wird, der die angegebenen Nachteile vermeidet.

Zur Lösung dieser Aufgabe werden erfindungsgemäß die im Kennzeichen des Anspruches 1 angegebenen Merkmale a) bis e) vorgeschlagen. Die Unteransprüche 2 bis 7 enthalten sinvolle ergänzende Maßnahmen.

Gegenstand der vorliegenden Erfindung ist die Anwendung an sich bekannter pulvermetallurgischer Verfahrensschritte, wie z. B. Pulveraufbereitung, Kapseltechnik und heißisostatisches Pressen.

Zur Aufbringung des Kantenschutzes auf der Turbinenschaufelkante ist zunächst vorgesehen, daß die Schaufel an der Stelle, wo der Kantenschutz angebracht werden soll, eine Aussparung hat. Diese Aussparung kann angeschmiedet oder spanend abgearbeitet sein.

Zur Bildung eines Hohlraumes, in den das den späteren Kantenschutz bildende Pulver eingefüllt und dann bis zu nahezu theoretischer Dichte während des HIP-Vorganges verdichtet wird, wird ein um das Schrumpfvolumen größeres Blech auf die Schaufeln im Bereich des Kantenschutzes aufgeschweißt. Zur Vermeidung einer Gefügeänderung durch den Kapselschweißvorgang hat es sich als günstig erwiesen, daß die Schaufeln Schweißkanten (Sicken) aufweisen, die über die normale Schaufelgeometrie hinausragen und bei der späteren Bearbeitung zur Herstellung der endgültigen Schaufelgeometrie mit abgearbeitet werden. Diese Schweißkanten können bereits am Rohteil angeschmiedet sein.

Das heißisostatische Pressen wird vorzugsweise mit den Parametern durchgeführt, bei denen Plastifizierung und diffusive Bindung sowohl innerhalb des Kantenschutzmaterials (Pulver) als auch zwischen Kantenschutzmaterial und Schaufelgrundwerkstoff zu einem festen, porenfreien Teilchen- und Schichtverbund führen.

Als Schaufelwerkstoffe haben sich Chrom-Stähle und Titan-Basislegierungen bewährt. Ein pulvermetallurgisch aufzubringender Kantenschutz sollte deshalb aus einem Material (bzw. einer Materialkombination) bestehen, das zumindest anteilig aus einem artgleichen oder artähnlichen Material wie der Schaufelwerkstoff besteht oder das aufgrund metallurgischer Gegebenheiten Festkörperdiffusion über Lösungsgleichgewichte zuläßt, um eine diffusive Bindung einzugehen. Bei den Materialdkombinationen ist denkbar, daß Pulver Verwendung finden, die während des HIP-Prozesses zu intermetallischen Verbindungen reagieren. Es können auch zusätzliche härtende Phasen (z. B. Hartstoffe) bereits dem Pulver beigemengt sein. Die Wirksamkeit des späteren Kantenschutzes hängt dabei einerseits von dem sich einstellenden Gefüge im Teilchenverbundwerkstoff ab, d. h. Form, Größe, Verteilung etc. der einzelnen Gefügebestandteile (Phasen und Defektstruktur), und andererseits vom Schichtverbund zwischen Kantenwerkstoff und Schaufelwerkstoff, was über eine Anpassung der Wärmeausdehnungskoeffizienten zur Verringerung von Grenzschichteigenspannungen erreicht wird.

Geeignete Werkstoffe/Werkstoffkombinationen für den Kantenschutz von Chromstahl-Schaufeln sind beispielsweise:
1. Stellite
2. CrxCy-Mischungen
3. NiCrBSi-Legierungen
4. Metall/Keramik-Gradierungen.

Geeignete Werkstoffe/Werkstoffkombinationen für den Kantenschutz von Titan-Basislegierungsschaufeln. wie sie z. T. auch in den zitierten Schriften genannt werden, sind beispielsweise:
1. Ti/TiC
2. TiAl6V4/TiC
3. Ti(X, Y, Z, U, V) mit X, Y, Z = (Al, Si, V, Zr, W, Ta, Cr) und U, V = (B, O, C, N), wobei X, Y, Z, U, V > 0 ist.

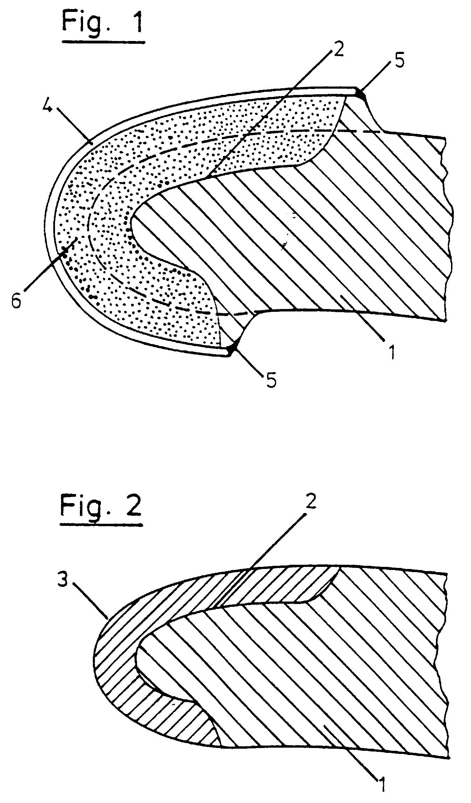

Die Erfindung wird anhand der beigefügten Figuren 1 und 2 beispielsweise näher erläutert.

Figur 1 zeigt schematisch das Ende einer Schaufel 1 mit den vorstehenden Schweißkanten 5, an die das Kapselblech 4 angeschweißt ist. Der Hohlraum zwischen dem Kapselblech 4 und der Aussparung 2 sowie den Schweißkanten 5 wird vor dem HIP-Prozeß möglichst vollständig mt dem vorgesehenen Pulver 6 gefüllt. Nach dem HIP-Vorgang und der anschließenden Bearbeitung zum Erreichen der endgültigen Schaufelgeometrie hat die Schaufel 1 gemeinsam mit dem Kantenschutz 3 die in der Figur 2 angegebene Form, die in Figur 1 durch gestrichelte Linien angedeutet worden ist.

### Bezugszeichenliste

- 1: Schaufel
- 2: Anpassung
- 3: Kantenschutz
- 4: Kapselblech
- 5: Schweißkante (Sicke)
- 6: Pulverfüllung vor dem HIP-Prozeß

## Patentansprüche

1. Verfahren zum Herstellen von verschleißfesten Kanten an Turbinenschaufeln, z. B. im Bereich der oberen Schaufeleintrittskante und am Deckblatt,
**dadurch gekennzeichnet**, daß
a) vor dem Aufbringen des Kantenschutzes an der entsprechenden Stelle der Schaufel eine Aussparung angebracht wird,
b) an der entsprechenden Stelle der Schaufel durch Pulverschüttung in Kapseltechnik eine Pulverschicht aus verschleißfestem Material aufgebracht wird, die
c) anschließend durch heißisostatisches Pressen (HIP) verdichtet wird, wobei eine diffuse Bindung mit dem Schaufelgrundwerkstoff hergestellt wird,
d) zur Aufbringung der Pulverschicht oberhalb der Aussparung ein Hohlraum für das nach dem HIP-Vorgang den späteren Kantenschutz bildende Pulver in der Weise gebildet wird, daß ein um das Schrumpfvolumen größeres Blech auf die Schaufel im Bereich des Kantenschutzes aufgeschweißt wird, das nach dem HIP-Vorgang wieder entfernt wird und daß
e) die Schaufel zum Anschweißen des Bleches vorstehende Schweißkanten oder Sicken aufweist, die bei der späteren Bearbeitung zur Herstellung der endgültigen Schaufelgeometrie mit abgearbeitet werden.

2. Verfahren nach Anspruch 1, **dadurch gekennzeichnet**, daß die aufzubringende Pulverschicht aus einem Material bzw. einer Materialkombination besteht, das zumindest anteilmäßig aus einem artgleichen oder artähnlichen Material wie der Schaufelwerkstoff besteht.

3. Verfahren nach Anspruch 1 oder 2, **dadurch gekennzeichnet**, daß die aufzubringende Pulverschicht im Verhältnis zum Schaufelwerkstoff so gewählt wird, daß eine Festkörperdiffusion über Lösungsgleichgewichte möglich wird.

4. Verfahren nach mindestens einem der vorhergehenden Ansprüche, **dadurch gekennzeichnet**, daß Pulver Verwendung finden, die während des HIP-Prozesses zu intermetallischen Verbindungen reagieren.

5. Verfahren nach mindestens einem der vorhergehenden Ansprüche, **dadurch gekennzeichnet**, daß dem Pulver härtere Phasen, vorzugsweise Hartstoffe, beigemengt werden.

6. Verfahren nach mindestens einem der vorhergehenden Ansprüche, **dadurch gekennzeichnet**, daß für den Kantenschutz von Schaufeln aus Chromstahl Pulver aus Stellit oder CrxCy-Mischungen oder NiCrBSi-Legierungen oder Metall/Keramik-Gradierungen verwendet werden.

7. Verfahren nach mindestens einem der vorhergehenden Ansprüche, **dadurch gekennzeichnet**, daß für den Kantenschutz von Schaufeln mit Titan-Basislegierungen Pulver aus Ti/TiC oder TiAl6V4/TiC oder Ti (X, Y, Z, U, V) mit X, Y, Z = (Al, Si, V, Zr, W, Ta, Cr) und U, V (= B, O, C, N), wobei X, Y, Z, U, V > 0 ist, verwendet werden.

## Claims

1. Process for the production of wear-resistant edges on turbine blades, for example in the field of the upper blade entry and at the cover blade, **characterized in that**
a) a recess is provided at the appropriate spot of the blade prior to the application of the edge protection
b) a powder film made of wear-resistant material is applied to the appropriate spot of the blade by way of powder dumping in capsule technique,
c) said powder film subsequently being comparted by way of hot isostatic pressing (HIP), thus creating a diffuse bond to the blade base material,
d) to apply the powder film a cavity is created above the recess for the powder forming the HIP protection later on after the HIP procedure in such a manner that a plate being greater by the powder shrinkage volume is welded onto the blade in the area of the edge protection and removed again after the HIP procedure, and that
e) the blade is provided with projecting weld edges or blades which are worked-off on machining later-on to produce the final blade geometry.

2. Process pursuant to Claim 1, **characterized in that** the powder film to be applied consists of a material and/or a combination of materials which at least in quotas consists of the same or similar material type as the blade material.

3. Process pursuant to Claim 1 or 2, **characterized in that** the powder film to be applied is so chosen in relation to the blade material that a solid-state diffusion through solution equilibrii becomes possible.

4. Process to at least any one of the preceding claims, **characterized in that** powders are utilized which react to intermetallic compounds in the course of the HIP process.

5. Process pursuant to at least any one of the preceding claims, **characterized in that** harder phases, preferably hard materials, are admixed to the powder.

6. Process pursuant to at least any one of the preceding claims, **characterized in that** powder made of stellite or CrxCy-mixtures or NiCrBSi-alloys or metal/ceramic grades are utilized for protection of blades made of chromium.

7. Process pursuant to at least any one of the preceding claims, **characterized in that** powders made of Ti/TiC or TiAl6V4/TiC or Ti (X, Y, Z, U, V) with X, Y, Z = (Al, Si, V, Zr, W, Ta, Cr) and U, V (= B, O, C, N) with X, Y, Z, U, V > 0, are utilized for the protection of edges of blades with titanium master alloys.

## Revendications

1. Procédé de protection des bords résistants à l'usure sur les aubes de turbine, p. ex. au niveau du bord d'entrée supérieur de l'aube et de la pale de recouvrement **caractérisé en ce que**
a) un évidement est effectué à l'endroit concerné de l'aube avant d'appliquer la protection du bord,
b) une couche de poudre résistante à l'usure est appliquée à l'endroit concerné de l'aube par versement de poudre selon la technique capsulaire
c) celle-ci est ensuite compactée par compression isostatique à chaud (CIC), une liaison diffuse étant établie avec le matériau de base de l'aube,
d) pour appliquer la couche de poudre au-dessus de l'évidement, un espace creux est formé pour la poudre qui constitue la protection du bord ultérieure après l'opération de compression isostatique à chaud de manière telle qu'une tôle, dont la taille est telle que le volume de rétraction de la poudre est pris en considération, est soudée sur l'aube au niveau de la protection des bords et enlevée ensuite après l'opération de compactage à chaud et que
e) l'aube présente des chanfreins de soudure ou bords saillants pour le soudage de la tôle, ceux-ci étant enlevés plus tard lors de l'usinage ultérieur pour la réalisation de la géométrie définitive de l'aube.

2. Procédé selon la revendication 1 **caractérisé en ce que** la couche de poudre à appliquer est constituée par un matériau ou une composition de matériau qui est composé d'un matériau similaire ou comparable à celui de l'aube du moins en ce qui concerne les teneurs.

3. Procédé selon la revendication 1 ou 2 **caractérisé en ce que** la couche de poudre à appliquer est choisie de manière telle par rapport au matériau de l'aube qu'une diffusion à l'état solide est possible via des solutions en équilibre.

4. Procédé selon au moins l'une des revendications précédentes **caractérisé en ce que** sont utilisées des poudres qui réagissent pendant le processus de compression isostatique à chaud pour donner des composés intermétalliques.

5. Procédé selon au moins l'une des revendications précédentes **caractérisé en ce que** des phases dures, de préférence des substances dures, sont mélangées à la poudre.

6. Procédé selon au moins l'une des revendications précédentes **caractérisé en ce que** de la poudre de stellite ou composée de mélanges CrxCy, d'alliages NiCrBSi ou de graduations de métallurgie céramique est utilisée pour la protection des bords d'aubes en acier chromé.

7. Procédé selon au moins l'une des revendications précédentes **caractérisé en ce que** pour la protection des bords d'aubes avec alliages à base de titane il est utilisé de la poudre de Ti/TiC ou TiAl6V4/TiC ou Ti (X, Y, Z, U, V) avec X, Y, Z = (Al, Si, V, Zr, W, Ta, Cr) et U, V (= B, O, C, N), X, Y, Z, U, V, > 0.
